(19)

Europäisches
Patentamt

European
Patent Office

Office européen
des brevets

(11) **EP 2 571 266 A1**

(12) **EUROPEAN PATENT APPLICATION**

(43) Date of publication:
**20.03.2013 Bulletin 2013/12**

(51) Int Cl.:
**H04N 7/26** (2006.01)    **H04N 7/50** (2006.01)

(21) Application number: **11306163.4**

(22) Date of filing: **16.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Bordes, Philippe
35890 Laille (FR)**
• **Orhand, Anita
35200 Rennes (FR)**

(74) Representative: **Hartnack, Wolfgang
Deutsche Thomson OHG
European Patent Operations
Karl-Wiechert-Allee 74
30625 Hannover (DE)**

(54) **Method and device for transrating a video stream**

(57)    The objective of the invention is to improve the performance of a transrating system (10). A processed video stream (IN) may contain at least one slice of a picture, the slice comprising luminance coefficients (Y) and chrominance coefficients (U, V). According to a first inventive method, the slice is transrated by performing at least a part of both a decoding procedure and an encoding procedure on that slice. For this, at least two independent transrating-units (14, 16, 18) are provided, each of which is designed to perform the decoding-encoding procedure independently from the other transrating-units (14, 16, 18). One of the transrating-units (14) processes the luminance data (Y), while at least one other of the transrating-units (16, 18) processes the chrominance data (U, V). According to a second inventive method, the two types of coefficients (Y and U, V) are re-quantised such that a different change in quantisation level results.

Fig.2

EP 2 571 266 A1

**Description**

The invention relates to a method and a device for transrating a video stream. In particular, the invention relates to transrating a video stream according to one of the following standards: MPEG-2, MPEG-4, particularly MPEG-4/AVC (Advanced Video Coding, which is also known as H.264), MPEG-4 Part 2, H.263, and MPEG-1.

Background

Video transrating is an efficient and widespread technology used to adapt the video bit-rate of a video stream to the heterogeneity of usages, applications, and end-device capabilities. Another application for transrating is to adapt the bit-rate of a media stream to the capacity of a transport network, i.e. its bandwidth. Transrating is sometimes also referred to as transcoding. However, this term can be confused with the process of transcoding a video for changing a frame size (e.g. transcoding HDTV to SDTV) and/or for changing the output codec (e.g. transcoding MPEG-2 to MPEG-4). In connection with the present invention, the term transrating means changing, in particular reducing, the amount of bits used for representing at least one given slice of a picture of the video stream. The term slice refers to a spatially distinct region of a picture or frame, wherein the slice is encoded separately from any other region of the same frame. Depending on the type of video stream, a slice may also comprise a complete picture.

When reducing the bit-rate of a video stream, the visual quality of pictures contained in the transrated video stream is generally lower than that of the original pictures. However, different algorithms for transrating exist that provide different output qualities. Choosing an algorithm that provides a good output quality generally also means that for the transrating a larger amount of calculations is to be performed. Thus, when implementing a video transrating system, one has to choose the algorithm offering the best compromise between calculation amount and quality.

Invention

A problem to be solved by the invention is to improve the performance of a transrating system in terms of output quality and/or speed. This problem is solved by the method disclosed in claim 1. An apparatus that utilises this method is disclosed in claim 7. Further, the problem can be solved by a device according to claim 13. Additional advantageous embodiments of the invention are given by the dependent claims.

According to a first aspect of the invention, the amount of bits used for representing a given slice of a picture of the video stream is changed by performing at least a part of both a decoding procedure and an encoding procedure on that slice. For doing this, at least two independent transrating-units are provided, each of which is designed to independently perform the decoding-encoding procedure on a part of the slice. More specifically, one of the transrating-units processes luminance data of the slice, while at least one other of the transrating-units processes chrominance data of the slice.

The inventive method improves the transrating system by exploiting the property of a picture that its luminance components and its chrominance components can be processed independently from each other. Consequently, one can run the transrating on different calculation modules in parallel and/or choose different algorithms for each of the components. This can afford a better compromise between calculation speed and output stream quality.

In connection with the invention, the term transrating-unit refers to a processing unit that is designed to be operated and/or configured independently of other transrating-units. It is thus possible to process the luminance data on the basis of a transrating algorithm (or a specific set of parameters for such a transrating algorithm) that completely differs from a transrating algorithm (or a set of parameters) that is used for transrating the chrominance data. In particular, each transrating-unit may be designed to independently perform at least one of the following decoding-encoding procedures as a transrating method: a full decoding and full encoding (FDFE), a cascaded pixel domain transrating (CPDT), a fast pixel domain transrating (FPDT), a fast DCT (discrete cosine transform) domain transrating (FDDT), a mixed re-quantisation algorithm (MRA). Selecting independently the processing algorithm for each component often allows finding a better compromise between calculation amount and output stream quality.

As the transrating-unit for processing the luminance data is different from the one (or the ones) processing the chrominance data, it is possible to make an optimal choice for processing these two different types of data. Accordingly, in one embodiment of the inventive method, the transrating-unit for processing the luminance data performs a different transrating method than the at least one transrating-unit for processing the chrominance data.

For instance, one can increase the visual quality of the transrated output stream by using FPDT for the luminance data and CPDT for the chrominance data, while this only slightly increases the calculation amount. Indeed, in most cases, a chrominance component drift is visually more annoying than luminance component drift. As the CPDT avoids this drift for the chrominance data, the visual quality can be improved. Generally, if the processing platform is not limited regarding the input stream characteristics (e.g. bit-rate or frame size), the FDFE or CPDT will be preferred, as each of these algorithms ensures the best quality. But if this is not the case, the FPDT will be the best compromise as it reduces the calculation amount while ensuring a predefined level of quality.

At least one of the transrating-unit may be designed to perform at least two different transrating methods for transrating data of a given slice of a picture. In one embodiment of the inventive methods, the transrating-unit chooses between the methods in dependence on at least one of the following criteria: a target bit-rate of the transrated video stream, a target quality of pictures of the transrated video stream, a PSNR (peak signal to noise ratio), an availability of processing resources. These criteria have proven to provide a suitable basis for choosing the best performing algorithm automatically on a transrating system.

In another embodiment of the inventive method, the luminance data and the chrominance data are processed simultaneously by operating the corresponding transrating-units on at least two different processor kernels. By using such a parallel structure, the resulting parallel processing of the luminance data and the chrominance data of a slice speeds-up the overall transrating process.

What is referred to as chrominance data in the preceding part of the description generally comprises two chrominance components of a picture, which are the Cr-component and the Cb-component. Accordingly, in a preferred embodiment of the inventive method a total of three transrating-units are provided, one of which processes the luminance data, one of which processes the Cr-coefficients comprised in the chrominance data and one of which processes the Cb-coefficients comprised in the chrominance data. This allows for an even finer tuning of the performance with regard to calculation amount, speed and quality.

The second aspect of the invention is also concerned with a method for transrating a video stream that comprises at least one slice of a picture that is at least partially represented by luminance coefficients as coefficients of a first type and chrominance coefficients as coefficients of a second type. For changing the amount of bits used for representing the slice, a quantisation level of the coefficients of one type is changed. With regard to the coefficients of the other type, a change of a quantisation level of these coefficients is smaller than the change of the quantisation level of the coefficients of the first type. Preferably, the change of the quantisation level of the chrominance coefficients (Cr-coefficients and/or Cb-coefficients) of the slice is smaller than the change of the quantisation level of the luminance coefficients. In connection with the invention, a lower level of quantisation means a smaller quantisation step size or, in other words, a finer resolution of the quantiser.

The principle of the re-quantisation algorithm is to inverse quantify DC and AC coefficients of at least the luminance data and to re-quantify them with a new, larger (coarser) quantisation step size. This leads to the change in the level of quantisation. The choice of the new quantisation step size can be made locally (for each macroblock of a given slice) and/or considering the overall target bit-rate reduction. The macroblock encoding modes do not need to be changed for performing this method. In general, the problem with re-quantisation algorithms is that they degrade the visual quality and can introduce drifts. Depending on the video content characteristics, the luminance or the chrominance degradation can be more visible. The inventive method according to the second aspect of invention allows to reduce (or even suppress) a luminance or a chrominance drift of the re-quantisation algorithm and/or to reduce the quality degradation of the luminance/chrominance component. The chrominance component represents only a few percentages of a typical video bitstream. Thus, in the case that the change of the quantisation level of the chrominance coefficients is smaller than that of the luminance coefficients, the inventive method does not degrade the re-quantisation efficiency in terms of bit-rate reduction significantly, while the overall output stream quality is increased.

According to one embodiment of the second inventive method, for at least one macroblock of the slice (preferably for all macroblocks of the slice) the level of quantisation of the chrominance coefficients after the transrating is smaller than or equal to the quantisation level of the luminance coefficients of that macroblock before the transrating. By this embodiment drift can be reliably avoided with regard to the chrominance coefficients. Preferably, the level of quantisation of the chrominance coefficients after the transrating is equal to the quantisation level of the luminance coefficients before the transrating for all macroblocks. This is feasible, for example, if the change of the quantisation level of the luminance coefficients is the same for each macroblock in the slice.

The method can be easily implemented in a way that allows applying the method to a conventional video stream. To this end, in one embodiment of the inventive method a picture parameter set (PPS) is inserted into the transrated video stream, wherein the additional picture parameter set comprises quantisation level information on the quantisation level of the transrated coefficients. This embodiment affords the advantage that the change of the quantisation level of the chrominance coefficients Cr and Cb can be easily defined in the transrated video stream by means of an offset that is added to a quantisation parameter QPy for the luminance coefficients in order to derive the quantisation parameter QPc of the chrominance coefficients and to address the table of the quantisation levels for chrominance coefficients Cr and Cb. Thus, a second path quantisation step index for the chrominance coefficients can be set that is different from the one for the luminance coefficients.

According to another embodiment of the second inventive method the at least one additional picture parameter set is derived from a picture parameter set that is already contained in the video stream before the transrating, i.e. in the input video stream. Thus, there is no need to derive the remaining syntax elements of the picture parameter set. These can be directly copied from the original picture parameter set.

In order to reduce the amount of bits used to encode the chrominance residuals in the transrated (output) video stream without modifying the DC components (thus avoiding drift in the chrominance), one embodiment of the second inventive method comprises the step of filtering and/or thresholding the AC chrominance coefficients. Further, a chroma quantisation parameter index offset for the transrated chrominance coefficients is set to a value such that a value of a chroma quantisation parameter $QP_c$ after the transrating is smaller than or equal to a value of a chroma quantisation parameter $QP_c$ before the transrating.

It is pointed out here that the invention also comprises methods that consist of a combination of an embodiment of the first inventive method and an embodiment of the second inventive method.

A third aspect of the invention is concerned with a device for transrating a video stream. The inventive device comprises a processing unit adapted to perform an embodiment of one of the inventive methods.

A particularly well performing embodiment of the device is obtained, if the processing unit comprises a multi-core and/or a multi-processor system. The inventive device may be provided, for example, as a transrater, a splicer, or a re-multiplexer.

Drawings

Exemplary embodiments of the invention are described with reference to the accompanying drawings, which show in:

Fig. 1      a schematic illustration of a transrating device according to one embodiment of the inventive transrating device;

Fig. 2      a block diagram of the transrating device of Fig. 1;

Fig. 3      a block diagram of a transrating-unit comprising an FDFE architecture;

Fig. 4      a block diagram of a transrating-unit comprising a CPDT architecture;

Fig. 5      a block diagram of a transrating-unit comprising an FPDT architecture;

Fig. 6      a block diagram of a transrating-unit comprising an FDDT architecture;

Fig. 7      a block diagram of a transrating-unit comprising an MRA architecture;

Fig. 8      a more compact representation of the MRA architecture of Fig. 8;

Fig. 9      a block diagram of another embodiment of the inventive transrating device;

Fig. 10     a table comparing the different, possible architectures of the transrating-units;

Fig. 11     a diagram showing the output quality of different transrating devices;

Fig. 12     a principle structure of a video stream before and after transrating the video stream according to an embodiment of the second inventive method;

Fig. 13     a diagram showing results for a PSNR for different transrated video streams;

Fig. 14     a table showing the percentage of bits used for luminance and chrominance coefficients in several different MPEG-4/AVC video streams.

Exemplary embodiments

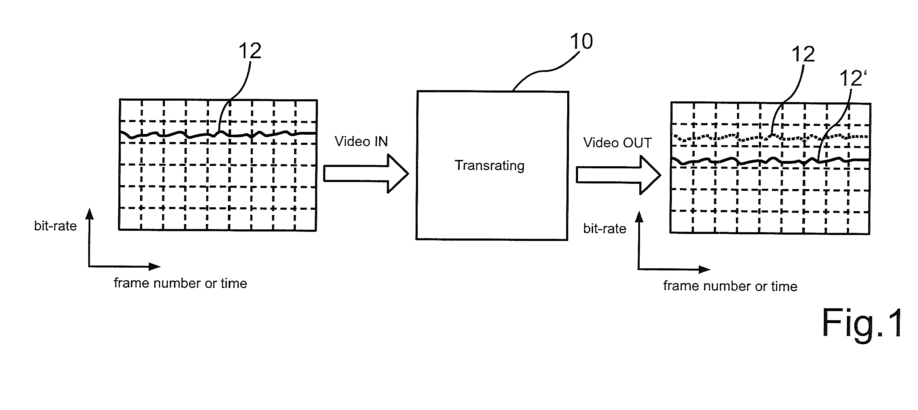

Fig. 1 shows a transrating device 10 that receives an input video stream IN and generates an output video stream OUT from the data of the input video stream IN. The transrating device 10 can be provided, for example, as a transrater or as a component of a splicer or a re-multiplexer. Both the input video stream IN and the output video stream OUT can be an MPEG-4, in particular an MPEG-4/AVC, or an MPEG 2 video stream.

The input video stream IN and the output video stream OUT contain the same sequence of frames or pictures. Transmitting the pictures of the input video stream IN to the transrating device 10 at a speed that allows for an online reproduction of the pictures of the output stream IN requires a bandwidth or bit-rate 12. The transrating device 10 reduces the amount of bits used for representing slices of the pictures of the input video streams IN. The resulting, transrated slices are re-assembles to give the output video stream OUT. For reproducing the pictures of the output video stream online, a bit-rate 12' is needed that is smaller than the bit-rate 12.

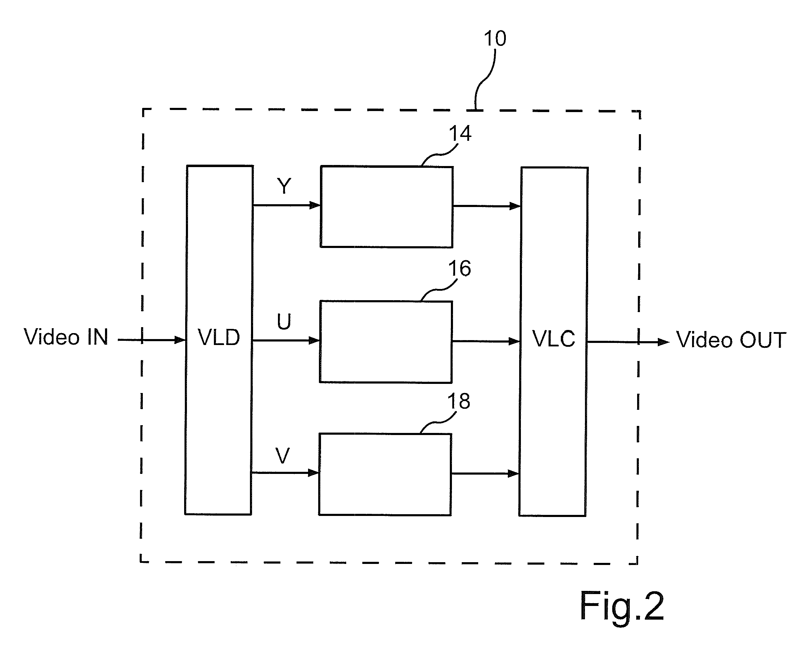

In Fig. 2 the transrating device 10 is shown in more detail. The input video stream IN is decoded by a variable length decoder VLD. The decoder VLD is coupled to three transrating-units 14, 16, 18. The output data of each transrating-unit 14, 16, 18 is transferred to a variable length encoder VLC. This encoder VLC combines the output data of the three transrating-units 14, 16, 18 and generates the output video stream OUT from these output data.

The decoder VLD sends luminance data Y of the decoded input video stream IN to the transrating-unit 14. Chrominance data U, V of the decoded input video stream IN are sent to the transrating-units 16 and 18, respectively. The luminance data Y comprises DC and AC luminance coefficients. The chrominance data U comprises DC and AC Cb-coefficients. The chrominance data V comprises DC and AC Cr-coefficients.

The transrating-units 14, 16, 18 can be provided as signal processing program code that is executable on a general purpose processor or a digital signal processor or a microcontroller. The transrating-units 14, 16, 18 can also be provides as one or more pieces of dedicated hardware, like an integrated circuit (IC), an FPGA (field programmable gate array) or an ASIC (application specific integrated circuit). Since the core transrating of, for example, a CPDT and a FPDT are processing the three components Y, U, V independently, one can parallelise this architecture for taking benefit of a multiprocessor platform and for choosing the transrating algorithm independently for each component. Accordingly, the transrating-units 14, 16, 18 may run in parallel, such that corresponding data Y, U, V belonging to the same slice of a picture is processed simultaneously.

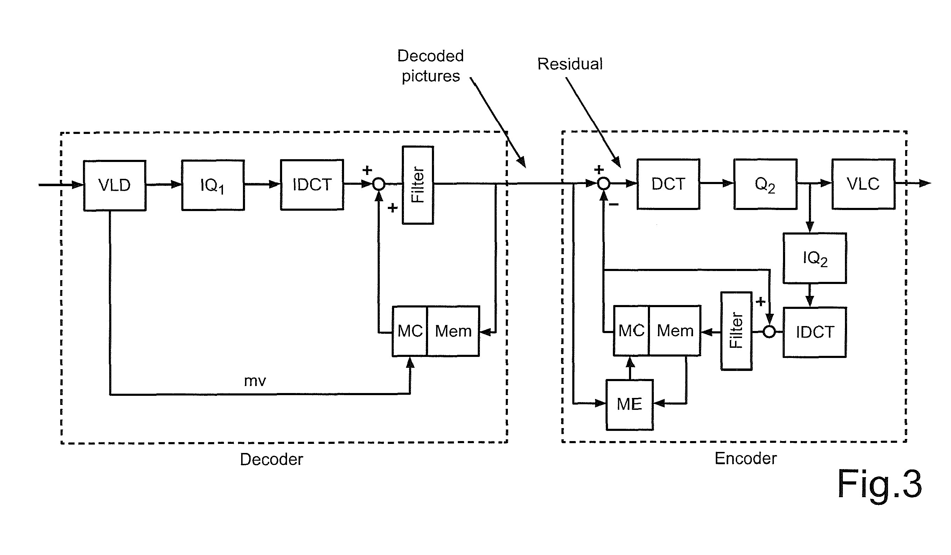

Each transrating-unit 14, 16, 18 may process the respective data Y, U, Y on the basis of the same or a different algorithms. In Fig. 3 to Fig. 8, examples of different decoding-encoding-procedures are shown as they may be performed by one of the transrating-units 14, 16, 18. In Fig. 3 to Fig. 8, the decoder VLD and the encoder VLC are also shown in order to provide a better orientation.

Fig. 3 shows a full decoding and full encoding (FDFE) architecture. In that case, a decoder and an encoder are simply cascaded. This straightforward architecture is the most costly one in terms of calculation amount (high CPU load). From the decoded video data, the coefficients are processed by a cascade of an inverse quantiser IQ1 and an inverse discrete cosine transform IDCT. Motion vectors mv of the decoded data are transferred to a motion compensation MC that processes decoded pictures from a previous frame. The corresponding data are stored in a memory Mem. The output of the motion compensation MC and the transform IDCT are combined and sent to a filter. The result is a fully decoded picture. From the fully decoded picture a residual is calculated on the basis of a motion estimation ME and a motion compensation MC. The residual is transformed by a discrete cosine transform DCT and the output coefficients are re-quantised by a quantisation Q2. The re-quantised coefficients are output to the encoder VLC and an inverse quantiser IQ2.

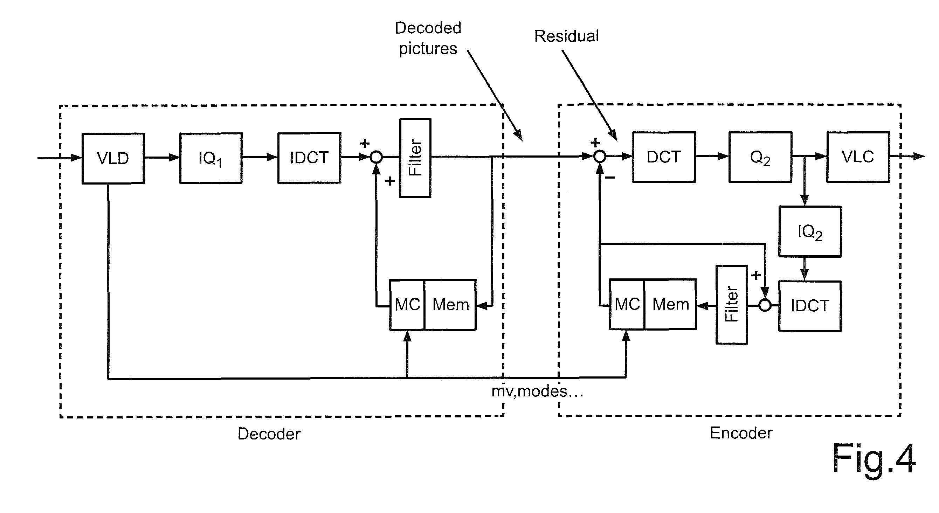

For the following architectures shown in Fig. 4 to Fig. 9, components corresponding in their functionality to those shown in Fig. 3 are also denoted with the same abbreviations like in Fig. 3.

Fig. 4 shows a cascaded pixel domain transrating (CPDT). The architecture is comparable to that of the FDFE of Fig. 3 except that the motion estimation ME and the coding choices (e.g. encoding modes, slice types, reference slices and the like) are reused from the input stream IN or are only slightly adapted. This architecture is also called full decoding partial encoding (FDPE). It simplifies the FDFE significantly, since processing the motion estimation and the coding choices is very costly in terms of calculation amount.

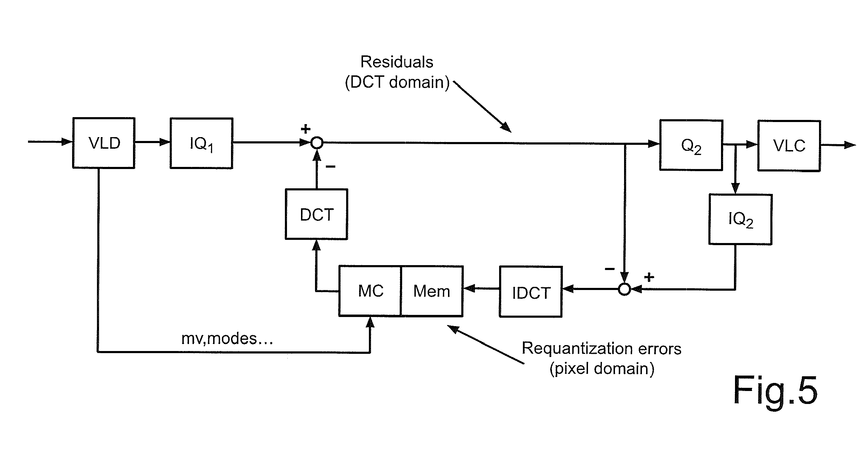

Fig. 5 shows a fast pixel domain transrating (FPDT). It is a simplification of the CPDT architecture. The linear property of the DCT and of the motion compensation MC is exploited. However this simplification can introduce small drifts, because of the non-linearity assumption in the case of both MPEG-2 and MPEG-4 and because of the intra prediction in the case of MPEG-4. This drift can be a problem in case of a long group of pictures (GOP).

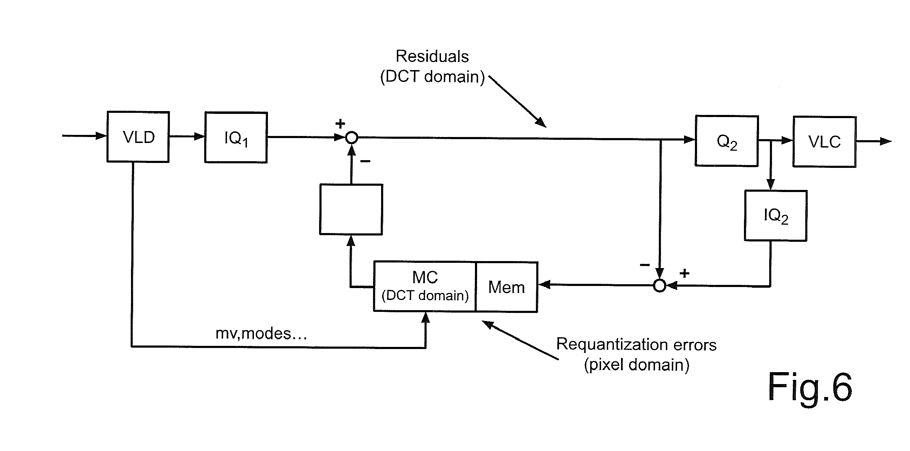

Fig. 6 shows a fast DCT domain transrating (FDDT). One can omit the IDCT and the DCT in the CPDT by operating the motion compensation of the re-quantisation errors in the DCT domain. However, this stage is more complex and is limited to some particular cases. More over, the calculation amount is not always reduced.

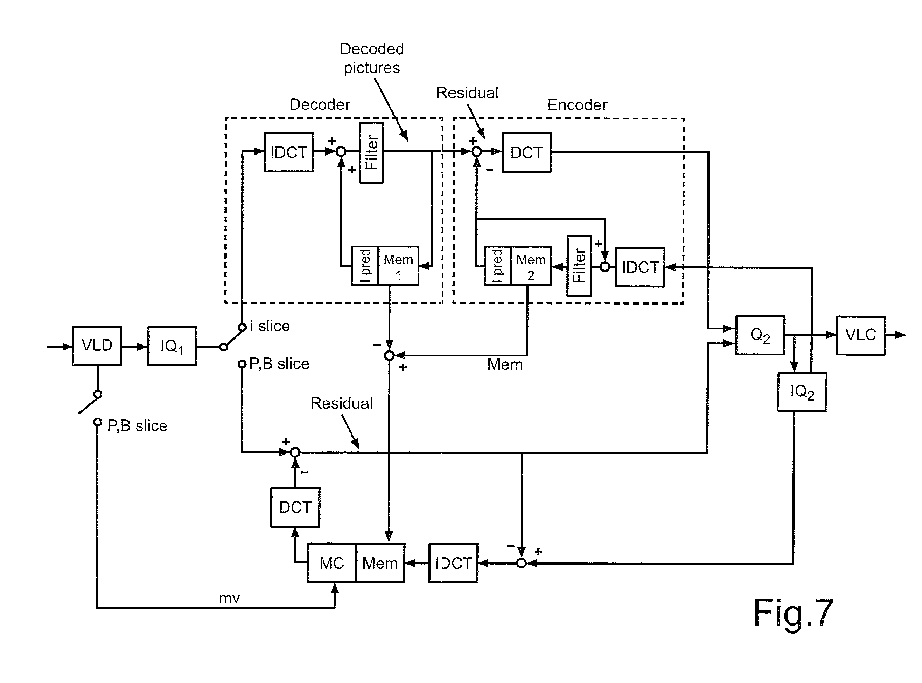

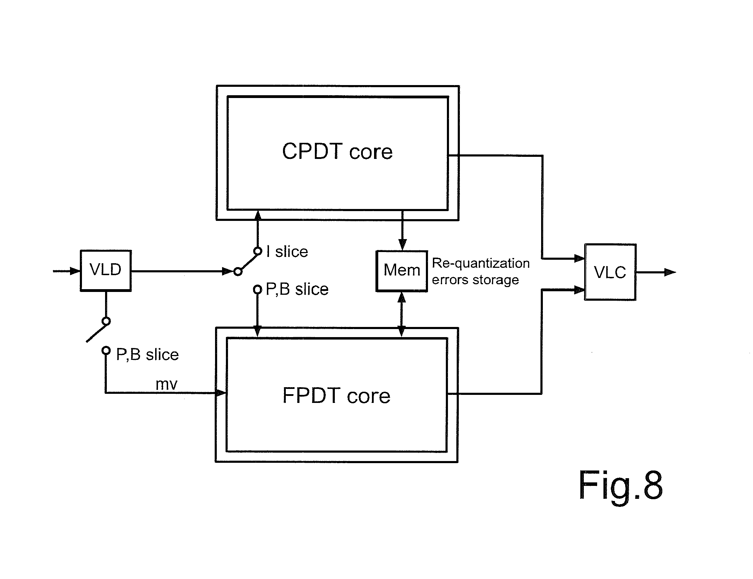

Fig. 7 shows a mixed re-quantisation algorithm (MRA). The MRA introduces a refinement by using CPDT for (intra-coded) I-slices and FPDT for (predictive-coded) P-slices and (bidirectionally predictive-coded) B-slices. Fig. 8 shows a simplified version of the block diagram of Fig. 7.

A further improvement is achieved by re-computing the CBP-parameters (CBP - coded block pattern) in the video stream, skipping modes in CPDT and FPDT and increasing the precision of the re-quantised errors storage. This version of the MRA is denoted here as MRA+MRE.

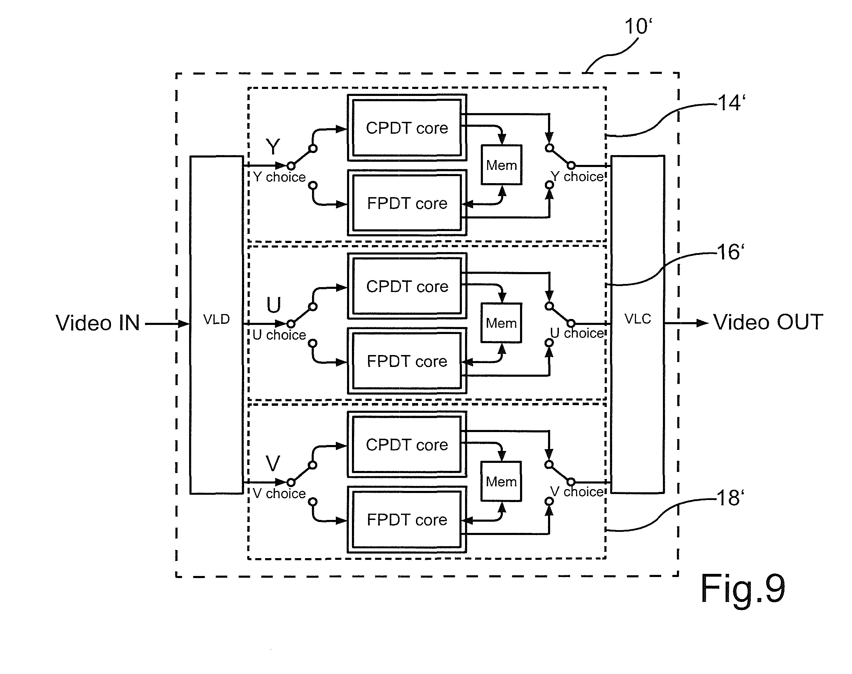

Fig. 9 shows a transrating device 10' with transrating units 14', 16', and 18'. Each of the transrating units 14', 16', 18' comprises an MRA+MRE architecture.

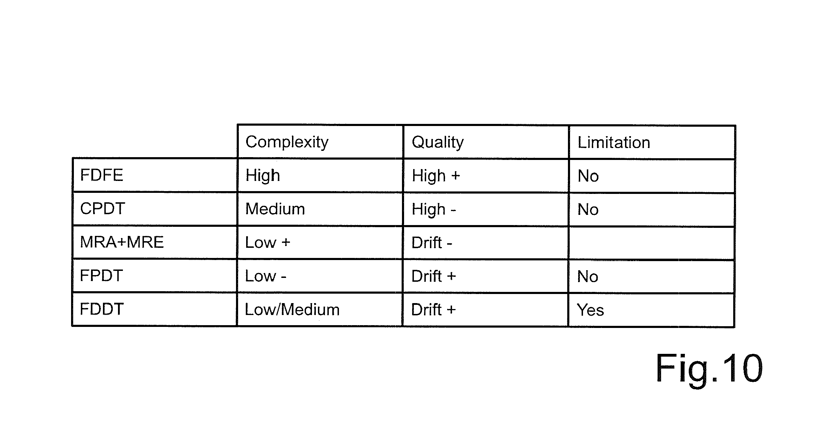

When implementing a video transrating system, one has to choose the algorithm offering the best compromise between calculation amount and quality. In Fig. 10, a table is shown that helps choosing a suitable architecture for each of the transrating-units of a transrating system for a specific application that is supposed to operate according to one embodiment of one of the inventive methods.

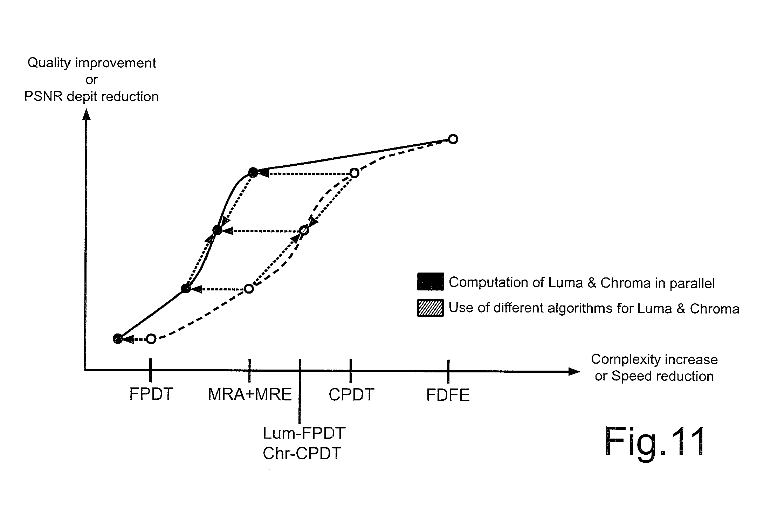

Fig. 11 shows the advantages of the inventive transrating devise (continuous line) in comparison to traditional approaches (dashed line).

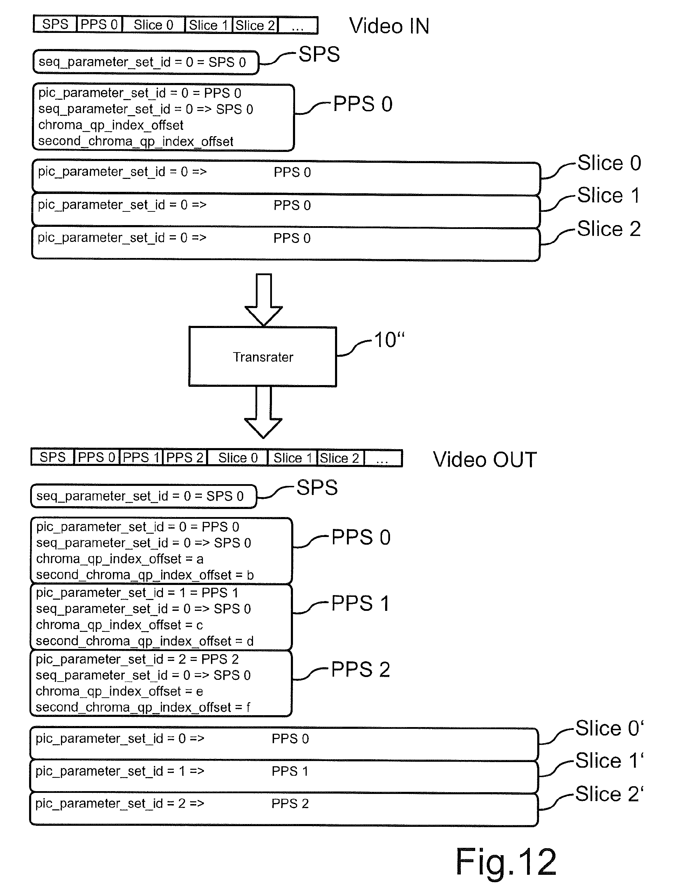

Fig. 12 shows the effect of transrating an input video stream IN into an output video stream OUT by means of a transrating device 10" according to another embodiment of the inventive transrating device. Both the input video stream IN and the output video stream OUT can be MPEG-4/AVC video streams. The transrating device 10" shown in Fig. 12 can be, for example, a transrater for the MPEG-4/AVC standard.

In the example shown, the input video stream IN contains a sequence parameter set SPS, a picture parameter set PPS0 and three slices Slice0, Slice1, Slice2. The output video stream OUT contains the sequence parameter set SPS, the picture parameter set PPS0, two new parameter sets PPS1, PPS2 and the three transrated slices Slice0', Slice1', Slice2'. Further data comprised in the input video stream IN and the output video stream OUT are not shown in detail in Fig. 12.

In Fig. 12, parts of the content of each parameter sets and the slices is also shown. A reference contained in a parameter set or a slice are pointed out in Fig. 12 by the symbol "=>". For example, picture parameter set PPS0 refers to the sequence parameter set SPS with identification SPS 0, i.e. seq_parameter_set_id=0 => SPS 0 in picture parameter set PPS0.

The transrating device 10" changes the quantisation level in the slices Slice0, Slice1, Slice2 in order to obtain the transrated slices Slice0', Slice1', Slice2'. In the example, each of the slices Slice0', Slice1', Slice2' has different values for the syntax elements chroma_qp_index_offset and second_chroma_qp_index_offset. In order to obtain an output video stream OUT according to the video standard used, the transrating device 10" has copied the picture parameter set PPS0 to obtain the picture parameter sets PPS1 and PPS2. Each of the picture parameter sets PPS0, PPS1, PPS2 contains one of the value pairs a/b, c/d, e/f for the two syntax elements chroma_qp_index_offset and second_chroma_qp_index_offset. By referencing the different picture parameter sets PPS0, PPS1, PPS2 the transrated slices Slice0', Slice1', Slice2' can refer to the right pair of values.

The transrating device 10" re-quantises differently the luminance and the chrominance coefficients contained in the slices Slice0, Slice1, Slice2 for obtaining the transrated slices Slice0', Slice1', Slice2'. The criteria for deciding the difference in quantisation steps between chrominance and luminance can be found on the basis of test sequences. In the following, qp1 is the quantisation step used for the initial coding given the input video stream IN. The value qp1 is used for an inverse quantisation during the transrating. Similarly, qp2 is the quantisation step used for the quantisation during the transrating to give the output video stream OUT. If for the same variation of the quantisation step for the chrominance and the luminance components, qp_delta = qp2 - qp1, the chrominance component is more degraded than the luminance one, a lower qp variation for chrominance then for luminance re-quantisation is decided or no variation of quantisation step for the re-quantisation of the chrominance component is decided at all. If for the same variation of the quantisation step for the chrominance and luminance components, qp_delta = qp2 - qp1, the luminance component is more degraded than the chrominance one, a lower qp variation for luminance then for chrominance re-quantisation is decided or no variation of the quantisation step for the re-quantisation of the luminance component is decided at all.

The transrating device 10" uses the picture parameter set PPS syntax elements chroma_qp_index_offset and second_ chroma_qp_index_offset defined in the document ITU-T Rec. H264-ISO/IEC 14496-10 AVC (MPEG4) or JVT H.264. These fields are used to specify an offset to be added to Qpy for addressing the table of QPc values for the Cb and the Cr chroma component. Another solution consists in setting a second path quantisation step index (qp2) for chrominance (chroma_qp2) different than the luminance one (luma_qp2). These values are stored in the dedicated fields that are chroma_qp_index_offset and second_chroma_qp_index_offset. Their range is specified in the standard within the limits [-12,+12].

The field chroma_qp_index_offset is used, in standard H.264, to define the quantiser value of the chrominance component when implementing the coding of the video data. The quantiser values used to quantify the AC and DC coefficients of a given macroblock for luminance (QPy) and chrominance (QPc) are derived from qp_index using formulae fy() and fc():

$$QPy = fy(qp)$$

$$QPc = fy(qp+chroma\_qp\_index\_offset).$$

Like was explained above, the re-quantisation algorithms degrade the review quality and can include use drifts, especially a FPDT and a FDDT. Depending on the video content characteristics, the luminance or the chrominance degradation can be more visible.

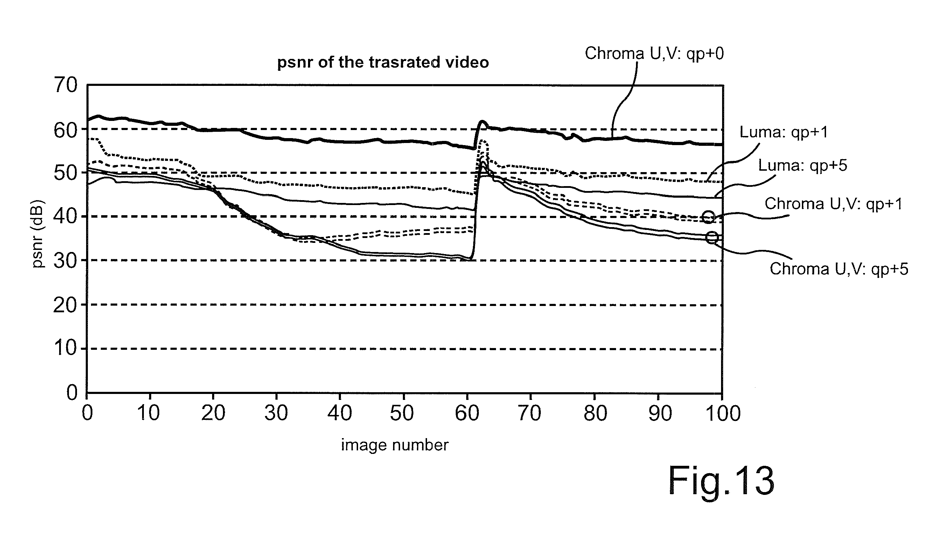

For instance, Fig. 13 represents the peak signal to noise ratio, or PSNR, obtained after transrating (FPDT) a video stream with qp2=qp1+1 and with qp2=qp1+5. For the larger variance of quantisation level a higher degradation (drift) for chrominance than for luminance is the result. This artefact is typical for the FPDT algorithm in the case of an AVC bitstream, in particular due to the wrong estimation of the chroma DC re-quantisation errors. Since the chroma-DC mode is widely represented in AVC encoded bit streams, this is a major source of drift in chrominance. In Fig. 13 the result is also shown for chrominance with qp2=qp1+0, that is without any change in quantisation level.

The process of re-quantisation in the transrating device 10" will use such information for the re-quantisation of the luminance and/or chrominance coefficients. For instance, to re-quantify chrominance softer than luminance, a value of chroma_qp_index_offset_2 is chosen such that for every macroblock: (qp2+chroma_qp_index_offset_2) - (qp1+chroma_qp_index_offset_1) < (qp2 - qp1).

Another solution consists in keeping the chrominance quantisation step, for the rescaling, un-changed, in order to avoid drift. In that case, the value of chroma_qp_index_ offset_2 is chosen such that for every macroblock (qp2+ chroma_qp_index_offset_2) <= qp1.

Most of the chrominance coefficients do not need to be re-quantised (same QPc). This reduces the amount of calculation significantly. The re-quantisation of the luminance value qp2 can be chosen such that

$$\texttt{(qp2+ chroma\_qp\_index\_offset\_2) = qp1.}$$

This is feasible, if (qp2-qp1) is the same for every macroblock in the slice.

In the AVC coding standard, the content of a PPS is a particular value of pic_parameter_set_id. it can be changed after the last VCL NAL unit (VCL - video coding layer; NAL - network abstraction layer) of a coded picture referring to it and before the first VCL NAL unit of another coded picture referring to it. Consequently, one can insert a PPS before each first VCL NAL unit of a coded picture with the desired value of chroma_qp_index_offset, except if two consecutive coded pictures have the same value for chroma_qp_index_offset. In the latter case, the previous one can be used.

In order to minimise the amount of inserted new PPS, the transrating device 10" can create for each PPS0 of the input stream IN a set of several PPS, i.e. PPS0, PPS1, PPS2, for the output stream OUT. The new PPS are identical to the original PPS except for the value of chroma_qp_index_offset and second_chroma_qp_index_offset. The value of chroma_qp_ index_offset (and similarly chroma_qp_index_offset_2) is chosen in order to fulfil one of the conditions given by the above equations for several (preferably most) coded pictures of the output stream OUT that were referring to the original PPS0.

Additionally, in order to reduce the amount of bits used to encode the chrominance residuals in the output stream OUT but without modifying the DC (to avoid drift in chrominance), the AC coefficients of the chrominance can be filtered and/or subjected to a threshold, while choosing a value of chroma_qp_index_offset_2 such that for each macroblock the following condition is fulfilled:

$$\texttt{(QPc=chroma\_qp2) <= (QPc=chroma\_qp1).}$$

This results in an equivalent bitstream size reduction.

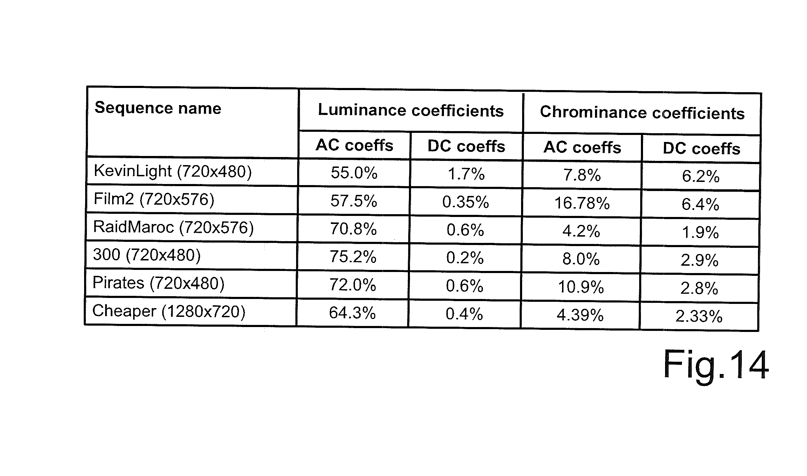

In Fig. 14 a table is given showing the percentage of bits used for luminance and chrominance coefficients in several typical MPEG-4/AVC video streams.

Referring again to Fig. 13, the result for chrominance with qp2=qp1+0 shows that by re-quantising differently the luminance and the chrominance coefficients the visual quality of the output pictures can be improved. At the same time, from Fig. 14 it is clear that the chrominance component represents only a few percentages of a typical AVC bitstream. Thus, the invention does not degrade the re-quantisation efficiency (in terms of bit-rate reduction) significantly, while it increases the overall quality of the output stream OUT.

**Claims**

1. Method for transrating a video stream (IN), wherein for changing, especially reducing, the amount of bits used for representing a given slice of a picture of the video stream at least a part of both a decoding procedure and an encoding procedure is performed on that slice, and wherein at least two independent transrating-units (14, 16, 18, 14', 16', 18') are provided, each of which independently performs the decoding-encoding procedure on a part of the slice, and wherein luminance data of the slice are processed by one of the transrating-units and chrominance data of the slice are processed by at least one other of the transrating-units.

2. Method according to claim 1, wherein each transrating-unit (14, 16, 18, 14', 16', 18') performs at least one of the following transrating decoding-encoding procedure: a full decoding and full encoding (FDFE), a cascaded pixel domain transrating (CPDT), a fast pixel domain transrating (FPDT), a fast DCT domain transrating (FDDT), a mixed re-quantisation algorithm (MRA).

3. Method according to claim 1 or 2, wherein the luminance data (Y) and the chrominance data (U, V) are processed at the same time by operating the transrating-units (14, 16, 18, 14', 16', 18') on at least two different data processor kernels.

4. Method according to any of the preceding claims, wherein the transrating-unit (14, 14') for processing the luminance data (Y) performs a different transrating method than the at least one transrating-unit (16, 18, 16', 18') for processing the chrominance data (U, V).

5. Method according to any of the preceding claims, wherein at least one of the transrating-units (14, 16, 18, 14', 16', 18') performs at least two different transrating methods and wherein for transrating the slice the transrating-unit (14, 16, 18, 14', 16', 18') chooses between the methods in dependence on at least one of the following criteria: a target bit-rate (12') of the transrated video stream (OUT), a target quality of pictures of the transrated video stream, a PSNR, availability of processing resources.

6. Method according to any of the preceding claims, wherein three transrating-units (14, 16, 18, 14', 16', 18') are provided, one of which processes the luminance data (Y), one of which processes Cr-coefficients (V) comprised in the chrominance data and one of which processes Cb-coefficients (U) comprised in the chrominance data.

7. Method for transrating a video stream (IN), the video stream (IN) comprising a slice (Slice0, Slice1, Slice2) of a picture that is at least partially represented by luminance coefficients as coefficients of a first type and chrominance coefficients as coefficients of a second type, wherein for changing the amount of bits used for representing the slice (14, 16, 18, 14', 16', 18') a quantisation level of the coefficients (Y, U, V) of one of said first and second types is changed, and wherein a change of a quantisation level of the coefficients (Y, U, V) of one type is smaller than the change of the quantisation level of the coefficients (Y, U, V) of the other type.

8. Method according to claim 7, wherein for at least one macroblock of the slice (Slice0, Slice1, Slice2), preferably for all macroblocks of the slice (Slice0, Slice1, Slice2), the level of quantisation of the chrominance coefficients (U, V) after the transrating is smaller than, or equal to, preferably always equal to, the quantisation level of the luminance coefficients (Y) of that macroblock before the transrating.

9. Method according to claim 7 or 8, wherein at least one additional picture parameter set (PPS1, PPS2) is inserted into the transrated video stream (OUT) and wherein the additional picture parameter set (PPS1, PPS2) comprises quantisation level information on the quantisation level of the transrated coefficients.

10. Method according to claim 9, wherein the at least one additional picture parameter set (PPS1, PPS2) is derived from a picture parameter set (PPSO) that is already contained in the video stream (IN) before the transrating.

11. Method according to one of claims 7 to 10, wherein a filter and/or a threshold is applied to AC chrominance coefficients and wherein a chroma quantisation parameter index offset for the transrated chrominance coefficients is set to a value such that a value of a chroma quantisation parameter QPc after the transrating is smaller than or equal to a value of a chroma quantisation parameter QPc before the transrating.

12. Method according to any of the preceding claims, wherein the video stream (IN) is encoded according to one of the following standards: MPEG-4, especially MPEG-4/AVC, MPEG-2, MPEG-4 Part 2, H.263, MPEG-1.

13. Device (10, 10', 10") for transrating a video stream, comprising a processing unit being adapted to perform a method of one of the preceding claims.

14. Device (10, 10', 10") according to claim 13, wherein the processing unit comprises a multi-core and/or a multi-processor system.

**15.** Device (10, 10', 10") according to claim 13 or 14, wherein the device is a transrater, a splicer, or a re-multiplexer.

Fig.1

Video IN

VLD

Y

U

V

14

16

18

10

VLC

Video OUT

Fig.2

Fig.3

EP 2 571 266 A1

Fig.4

Fig.5

Fig.6

Fig.7

Fig.8

Fig.9

|  | Complexity | Quality | Limitation |
|---|---|---|---|
| FDFE | High | High + | No |
| CPDT | Medium | High - | No |
| MRA+MRE | Low + | Drift - |  |
| FPDT | Low - | Drift + | No |
| FDDT | Low/Medium | Drift + | Yes |

Fig.10

Fig.11

| SPS | PPS 0 | Slice 0 | Slice 1 | Slice 2 | ... |  Video IN

seq_parameter_set_id = 0 = SPS 0 )⌐SPS

```
pic_parameter_set_id = 0 = PPS 0
seq_parameter_set_id = 0 => SPS 0        ⌐PPS 0
chroma_qp_index_offset
second_chroma_qp_index_offset
```

| pic_parameter_set_id = 0 =>            PPS 0 |  ⌐Slice 0
| pic_parameter_set_id = 0 =>            PPS 0 |  ⌐Slice 1
| pic_parameter_set_id = 0 =>            PPS 0 |  ⌐Slice 2

⇓

| Transrater | —10"

⇓

| SPS | PPS 0 | PPS 1 | PPS 2 | Slice 0 | Slice 1 | Slice 2 | ... |  Video OUT

seq_parameter_set_id = 0 = SPS 0 )⌐SPS

```
pic_parameter_set_id = 0 = PPS 0
seq_parameter_set_id = 0 => SPS 0          ⌐PPS 0
chroma_qp_index_offset = a
second_chroma_qp_index_offset = b
```

```
pic_parameter_set_id = 1 = PPS 1
seq_parameter_set_id = 0 => SPS 0          ⌐PPS 1
chroma_qp_index_offset = c
second_chroma_qp_index_offset = d
```

```
pic_parameter_set_id = 2 = PPS 2
seq_parameter_set_id = 0 => SPS 0          ⌐PPS 2
chroma_qp_index_offset = e
second_chroma_qp_index_offset = f
```

| pic_parameter_set_id = 0 =>            PPS 0 |  ⌐Slice 0'
| pic_parameter_set_id = 1 =>            PPS 1 |  ⌐Slice 1'
| pic_parameter_set_id = 2 =>            PPS 2 |  ⌐Slice 2'

# Fig.12

Fig.13

EP 2 571 266 A1

| Sequence name | Luminance coefficients | | Chrominance coefficients | |
|---|---|---|---|---|
| | AC coeffs | DC coeffs | AC coeffs | DC coeffs |
| KevinLight (720x480) | 55.0% | 1.7% | 7.8% | 6.2% |
| Film2 (720x576) | 57.5% | 0.35% | 16.78% | 6.4% |
| RaidMaroc (720x576) | 70.8% | 0.6% | 4.2% | 1.9% |
| 300 (720x480) | 75.2% | 0.2% | 8.0% | 2.9% |
| Pirates (720x480) | 72.0% | 0.6% | 10.9% | 2.8% |
| Cheaper (1280x720) | 64.3% | 0.4% | 4.39% | 2.33% |

Fig.14

Europäisches
Patentamt

European
Patent Office

Office européen
des brevets

# EUROPEAN SEARCH REPORT

Application Number

EP 11 30 6163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/067979 A1 (TAKAHASHI KUNIAKI [JP] ET AL) 10 April 2003 (2003-04-10)<br>* abstract *<br>* figures 2,3,4 *<br>* paragraph [0004] - paragraph [0006] *<br>* paragraph [0060] - paragraph [0066] *<br>* paragraph [0087] *<br>* paragraph [0105] *<br>* paragraph [0117] *<br>* paragraph [0122] *<br>----- | 1-13,15 | INV.<br>H04N7/26<br>H04N7/50 |
| X | GB 2 323 493 A (BRITISH BROADCASTING CORP [GB]) 23 September 1998 (1998-09-23)<br>* page 3, line 2 - page 5, line 18 *<br>* page 9, line 2 - page 10, line 11 *<br>* page 17, line 9 - page 19, line 7 *<br>* figure 1; tables 1,2 *<br>* page 13, line 15 - page 13, line 22 *<br>----- | 1-3,6-8, 12-15 | |
| X | SORIAL H ET AL: "Estimating Laplacian parameters of DCT coefficients for requantization in the transcoding of MPEG-2 video",<br>IMAGE PROCESSING, 2000. PROCEEDINGS. 2000 INTERNATIONAL CONFERENCE ON SEPTEMBER 10-13, 2000, IEEE, PISCATAWAY, NJ, USA, vol. 1, 10 September 2000 (2000-09-10), pages 956-959, XP010530775,<br>DOI: 10.1109/ICIP.2000.901119<br>ISBN: 978-0-7803-6297-0<br>* the whole document *<br>----- | 1-3,6-8, 12-14 | TECHNICAL FIELDS SEARCHED (IPC)<br><br>H04N |

-/--

The present search report has been drawn up for all claims

| Place of search | Date of completion of the search | Examiner |
|---|---|---|
| Munich | 20 February 2012 | Le Guen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 30 6163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEFOL D ET AL: "PERFORMANCE EVALUATION OF TRANSCODING ALGORITHMS FOR H.264", IEEE TRANSACTIONS ON CONSUMER ELECTRONICS, IEEE SERVICE CENTER, NEW YORK, NY, US, vol. 52, no. 1, 1 February 2006 (2006-02-01), pages 215-222, XP008078918, ISSN: 0098-3063, DOI: 10.1109/TCE.2006.1605050 * the whole document * | 1-15 | |
| A | CHEOLHONG AN ET AL: "Adaptive Lagrange Multiplier Selection Using Classification-Maximization and Its Application to Chroma QP Offset Decision", IEEE TRANSACTIONS ON CIRCUITS AND SYSTEMS FOR VIDEO TECHNOLOGY, IEEE SERVICE CENTER, PISCATAWAY, NJ, US, vol. 21, no. 6, 1 June 2011 (2011-06-01), pages 783-791, XP011325915, ISSN: 1051-8215, DOI: 10.1109/TCSVT.2011.2130470 * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 20 February 2012 | Le Guen, Benjamin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 30 6163

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2012

| Patent document cited in search report | | Publication date | Patent family member(s) | | Publication date |
|---|---|---|---|---|---|
| US 2003067979 | A1 | 10-04-2003 | JP<br>US<br>US | 2003037843 A<br>2003067979 A1<br>2006269156 A1 | 07-02-2003<br>10-04-2003<br>30-11-2006 |
| GB 2323493 | A | 23-09-1998 | NONE | | |

EPO FORM P0459

For more details about this annex : see Official Journal of the European Patent Office, No. 12/82